# EUROPÄISCHE PATENTANMELDUNG

(11) **EP 2 390 232 A1**
(43) Veröffentlichungstag der Anmeldung: **30.11.2011**
(21) Anmeldenummer: 11168014.6
(22) Anmeldetag: 30.05.2011
(51) Int. Cl.: C02F 1/00, C02F 1/28, C02F 1/42

(54) **Vorrichtung zum Behandeln von Prozesswasser**

(30) Priorität: 31.05.2010 DE 102010029516
(71) Anmelder: Brita Professional GmbH & Co. KG, 65232 Taunusstein (DE)
(72) Erfinder: Reder, Ernst, 55278 Hahnheim (DE); Petersen, Urte, 65232 Taunusstein (DE); Dobbelfeld, Andrea, 65326 Aarbergen-Panrod (DE)
(74) Vertreter: van Lookeren Campagne, Constantijn August

(57) **Zusammenfassung**

Eine Vorrichtung zum Behandeln von Prozesswasser, insbesondere für industrielle und/oder Heimanwendungen, umfasst eine durchströmbare erste Kammer (22) mit ersten Mitteln (26) zum Entmineralisieren des Wassers, eine durchströmbare zweite Kammer (24) mit zweiten Mitteln (32) zum Ausführen eines weiteren Behandlungsschritts, wobei die erste Kammer (22) stromaufwärts der zweiten Kammer (24) angeordnet ist und die erste und die zweite Kammer (22,24) mittels eines Kanals (36) verbunden sind, einen Zulauf (38) zum Zuführen des Wassers in die erste Kammer (22), und einen Ablauf (41) zum Abführen des Wassers aus der zweiten Kammer (24). Stromaufwärts der erstem Kammer (22) ist eine aus dem Zulauf (38) abzweigende und stromabwärts der zweiten Kammer (24) in den Ablauf (41) mündende Verbindung (44) zum Leiten von unbehandeltem Wasser vom Zulauf (38) in den Ablauf (41) vorgesehen.

## Beschreibung

Die vorliegende Erfindung betrifft eine Vorrichtung zum Behandeln von Prozesswasser, insbesondere für industrielle und/oder Heimanwendungen, umfassend eine durchströmbare erste Kammer mit ersten Mitteln zum Entmineralisieren des Wassers, eine durchströmbare zweite Kammer mit zweiten Mitteln zum Ausführen eines weiteren Behandlungsschritts, wobei die erste Kammer stromaufwärts der zweiten Kammer angeordnet ist und die erste und die zweite Kammer mittels eines Kanals verbunden sind, einen Zulauf zum Zuführen des Wassers in die erste Kammer und einen Ablauf zum Abführen des Wassers aus der zweiten Kammer. Ferner betrifft die Erfindung ein entsprechendes Verfahren und eine Verwendung der Vorrichtung.

Als Prozesswasser soll in diesem Zusammenhang Wasser verstanden werden, welches in einem technischen Prozess eine bestimmte Funktion übernimmt, beispielsweise eine Wärmeübertragung. Wenn im Folgenden von Wasser gesprochen wird, ist Prozesswasser gemeint. Vorrichtungen der oben genannten Art werden insbesondere dann eingesetzt, wenn Prozesswasser über längere Zeit in einem geschlossenen Kreislauf geführt wird, beispielsweise zur Wärmeübertragung. In Heizungs-und Warmwasseranlagen wird das Wasser als Wärmeträgermedium verwendet, welches über lange Zeit in einem Heizkreislauf geführt wird, wobei es wiederholt erwärmt und abgekühlt wird. Besonders durch die Steigerung der Wirkungsgrade der Heizungs- und Warmwasseranlagen wurden die Heizflächenbelastungen (kW/m²) und somit die Oberflächentemperaturen der Wärmeübertragungsflächen wie beispielsweise an den Heizkörpern und Wärmetauschern in den letzten Jahren zunehmend gesteigert. Dies hat zur Folge, dass im Betrieb einer Heizungs- oder Warmwasseranlage mit der Zeit Störungen durch Kalk, Korrosion und Rostschlamm auftreten können. Insbesondere eine Belagbildung durch Kalk (Kesselstein), hervorgerufen durch hartes Wasser, in den Rohren der Heizungs- und Warmwasseranlagen, vor allem in den Wärmetauschern, führt zu einer Reduzierung des Wirkungsgrads der Heizungs- oder Warmwasseranlage. Korrosion tritt insbesondere bei Wasser auf, welches einen pH-Wert im sauren Bereich aufweist.

Ein weiterer Anwendungsbereich von Prozesswasser ist die Kühlung von Werkzeugmaschinen, wozu das Prozesswasser auch über längere Zeit in einem geschlossenen Kreislauf geführt wird.

Um die oben genannten Probleme der Belagbildung und der Korrosion zu reduzieren, ist es notwendig, das Prozesswasser, welches im Kreislauf geführt wird, zu konditionieren. Hierzu wird üblicherweise das Wasser entmineralisiert, wozu im Allgemeinen Ionenaustauscher eingesetzt werden. Anschließend oder gleichzeitig wird der pH-Wert auf einen bestimmten Wert eingestellt, der üblicherweise im leicht basischen Bereich liegt. Bei Heiz-oder Wärmeanlagen werden in der Regel Chemikalien zur Stabilisierung des pH-Wertes in den Heizkreislauf eingebracht. Die Chemikalien können beispielsweise mittels eines Schlauches in den Heizkreislauf eingebracht werden, was den Nachteil aufweist, dass das Einbringen nicht kontinuierlich durchführbar ist und daher regelmäßig wiederholt werden muss, was mit Aufwand verbunden ist. Unterbleibt dies, können die oben genannten Folgen nicht verhindert werden. Weiterhin kann der Schlauch beim Einbringen der Chemikalien in den Heizkreislauf vom entsprechenden Anschluss abspringen, wodurch Personen in unmittelbarer Nähe durch die Chemikalien verletzt werden können.

Die DE 10 2005 036 356 beschreibt eine Wasserbehandlungseinrichtung für eine Heizungs- oder Warmwasseranlage mit einem Behälter, der eine wasserdurchflossene Kammer aufweist, wobei in der Kammer Ionenaustauscherelemente gehalten sind, welche das durch die Kammer geleitete Wasser zumindest teilweise entmineralisieren und wobei der pH-Wert des Wasser auf einen Wert im Bereich zwischen 8 und 11 überführt wird. Die Notwendigkeit der Zugabe von Chemikalien entfällt und die Wasserbehandlungseinrichtung muss nur in bestimmten Abständen ausgetauscht oder regeneriert werden, wenn die Ionenaustauscherelemente erschöpft sind. Nachteilig bei dieser Wasserbehandlungseinrichtung ist jedoch, dass der Grad der Behandlung des Wassers nicht eingestellt werden kann. Die Entmineralisierung des Wassers wird so vollständig vorgenommen, dass die Pufferkapazität des Wassers abnimmt, da Kalkverbindungen einen Karbonatpuffer darstellen. Die Einstellung des pH-Wertes auf den angegebenen Bereich und die Stabilisierung sind daher schwierig.

In dieser Wasserbehandlungseinrichtung wird der pH-Wert mit den Ionenaustauscherelementen eingestellt. Da sich die Ionenaustauscherelemente im Betrieb mehr und mehr erschöpfen, kann es zu Ungenauigkeiten im Ionenaustausch kommen, die aufgrund der verringerten Pufferkapazität des Wassers zu einer großen Änderung des pH-Wertes führen. Auch außerhalb der Wasserbehandlungseinrichtung im Heizkreislauf können lokale Vorgänge, beispielsweise Ausfällung- oder Auflösungsreaktionen, eine Änderung des pH-Wertes hervorrufen und aufgrund der verringerten Pufferkapazität zu einem pH-Wert führen, der deutlich außerhalb des gewünschten Bereiches liegt.

Die Entmineralisierung und die pH-Wert-Einstellung werden bei der in der DE 10 2005 036 356 beschriebenen Vorrichtung in einer Kammer vorgenommen. Bei der gattungsgemäßen Vorrichtung jedoch sind die erste und die zweite Kammer und damit die ersten und die zweiten Mittel räumlich vollständig voneinander getrennt. Die Entmineralisierung wird unabhängig von der pH-Wert-Einstellung und/oder der pH-Wert-Stabilisierung vorgenommen, so dass keine negativen Interaktionen hervorgerufen werden. Weiterhin kann der erste Behandlungsschritt so ausgeführt werden, dass das Wasser gezielt auf den zweiten Behandlungsschritt vorbereitet wird, so dass der zweite Behandlungsschritt unter optimalen Bedingungen durchführbar ist. Die räumliche Trennung der ersten und der zweiten Kammer voneinander hat weiterhin den Vorteil, dass beide Kammern getrennt voneinander gefüllt, ausgetauscht und/oder regeneriert werden können.

Weiterhin wird in der DE 10 2005 036 356 das Korrosionsschutzmittel in Form einer Tablette zugegeben, was dazu führt, dass sie sich unabhängig davon, ob in der Vorrichtung eine Strömung anliegt oder nicht, auflöst.

Aufgabe der vorliegenden Erfindung ist es daher, eine Vorrichtung der eingangs genannten Art dahingehend weiterzuentwickeln, dass der Grad der Behandlung des Prozesswassers, welches im Kreislauf einer Anlage wie einer Werkzeugmaschine oder einer Heizungs- oder Warmwasseranlage geführt wird, eingestellt werden kann, sie aber gleichzeitig mobil und flexibel an verschiedenen Anlagen einsetzbar ist.

Gelöst wird die Aufgabe bei einer erfindungsgemäßen Vorrichtung durch eine stromaufwärts der ersten Kammer aus dem Zulauf abzweigende und stromabwärts der zweiten Kammer in den Ablauf mündende Verbindung zum Leiten von unbehandeltem Wasser vom Zulauf in den Ablauf. Ein erster Teil des Wassers wird behandelt, ein weiterer Teil, der durch die Verbindung strömt, nicht. Das Verhältnis der beiden Teile des Wassers kann konstruktiv eingestellt werden. Das Verhältnis entspricht dem Grad der Behandlung des Wassers, da sichergestellt ist, dass der Teil des Wassers, der durch die Verbindung strömt, nicht behandelt wird.

Vorzugsweise verlaufen der Zulauf und der Ablauf unter Ausbildung eines Ringraums konzentrisch zueinander und die Verbindung steht in Fluidkommunikation mit dem Ringraum. Der Zulauf und der Ablauf treten im selben Bereich in die Vorrichtung ein bzw. aus ihr aus. Somit wird die Vorrichtung kompakt und raumsparend ausgeführt, insbesondere wird kein weiterer Platz mehr für die Verbindung benötigt. Ferner ist es auch möglich, die Vorrichtung mit dem Ende, welches dem Bereich, in dem sich der Zulauf und der Ablauf befinden, gegenüber liegt, auf den Boden zu stellen, so dass keine aufwändigen Maßnahmen zur Halterung und Fixierung ergriffen werden müssen. Dies vereinfacht die Handhabung und den Transport der Vorrichtung, die dadurch flexibler einsetzbar ist.

In einer bevorzugten Weiterbildung der erfindungsgemäßen Vorrichtung umschließt der Zulauf den Ablauf zumindest abschnittweise, wobei die Verbindung als Bohrung in einer Wandung des Ablaufs ausgebildet ist. Die Ausbildung der Verbindung als Bohrung ist konstruktiv einfach, ferner kann mit der Wahl des Durchmessers der Bohrung das Verhältnis zwischen dem behandelten und dem unbehandelten Teil des Wassers auf einfache Weise eingestellt werden.

Vorzugsweise umschließt der Zulauf den Ablauf zumindest abschnittweise und umfasst die Vorrichtung ein zumindest teilweise in den Ablauf einbringbares Einsteckteil mit einem Durchgang zum Abführen des Wassers und einen Anschlag, mit dem das Einsteckteil mit einem freien Ende des Ablaufs zur Anlage kommt, wobei die Verbindung abschnittsweise zwischen der Wandung und dem Einsteckteil verläuft. Das Einsteckteil lässt sich einfach fertigen und in einen bestehenden Ablauf einbringen, ohne dass aufwendige konstruktive Änderungen vorgenommen werden müssen. Es ist ebenfalls austauschbar, wenn es nicht mehr benötigt wird oder beschädigt ist.

Vorzugsweise wird die Verbindung von einer in der Wandung und/oder im Einsteckteil angeordneten Ausnehmung gebildet. Für den Fall, dass die Ausnehmung im Einsteckteil angeordnet ist, kann ein Satz von Einsteckteilen zur Verfügung gestellt werden, so dass der durch die Verbindung geleitete Teil des unbehandelten Wassers durch einen Austausch der Einsteckteile auf den jeweiligen Anwendungsfall angepasst werden kann. Zusätzliche Bauteile sind nicht notwendig, wodurch die Zuverlässigkeit der Vorrichtung erhöht wird. Für den Fall, dass die Ausnehmung in der Wandung angeordnet ist, kann das Einsteckteil sehr einfach gefertigt sein und es kann der Anteil des Wassers, der durch die Verbindung geführt wird, fest eingestellt werden.

In einer bevorzugten Weiterbildung der Vorrichtung, in der ein erster Volumenstrom durch die erste Kammer und die zweite Kammer strömt und ein zweiter Volumenstrom durch die Verbindung strömt, ist eine Einstelleinrichtung zum Einstellen des Verhältnisses zwischen dem ersten und dem zweiten Volumenstrom vorgesehen. Das Verhältnis der Volumenströme entspricht dem Verhältnis zwischen dem behandelten und dem unbehandelten Teil des Wassers. Die Einstelleinrichtung ermöglicht es, das Verhältnis flexibel auf die vorhandenen Gegebenheiten, insbesondere auf die Eigenschaften des vorliegenden Wassers, einzustellen. Beispielsweise kann eine Irisblende in der Verbindung vorgesehen werden, mit welcher der Durchmesser variiert werden kann.

Das Wasser, welches üblicherweise dem Leitungswassernetz entnommen wird, weist lokale Unterschiede auf. Insbesondere ist die Härte des Wassers lokal sehr unterschiedlich, unter anderem abhängig davon, aus welchem geologischen Umfeld das Wasser entnommen wird. Das eingestellte Verhältnis der Volumenströme kann den Eigenschaften des Wassers Rechnung tragen.

Vorzugsweise ist die Einstelleinrichtung so ausgestaltet, dass das eingestellte Verhältnis zwischen dem ersten und dem zweiten Volumenstrom im Wesentlichen unabhängig von der Strömungsgeschwindigkeit des Wassers ist.

Hierzu können die Einstelleinrichtung und die Verbindung so ausgestaltet sein, dass die in ihnen anliegende Strömung über einen großen Bereich der Strömungsgeschwindigkeit laminar ist, wodurch die Abhängigkeit des Verhältnisses zwischen dem ersten und dem zweiten Volumenstrom von der Strömungsgeschwindigkeit deutlich reduziert wird. Dies kann beispielsweise durch eine kanten- und eckenarme Gestaltung der Einstelleinrichtung und der Verbindung erreicht werden, um Strömungsabrisse und Turbulenzen zu reduzieren. Die Einstelleinrichtung wird so ausgelegt, dass die typischerweise vorliegenden Strömungsgeschwindigkeiten in diesem Bereich liegen. Es müssen keine Vorkehrungen zur Regulierung der Strömungsgeschwindigkeit getroffen werden, um das eingestellte Verhältnis zwischen dem ersten und dem zweiten Volumenstrom weitgehend konstant halten zu können.

In einer bevorzugten Ausgestaltung ragt die Einstelleinrichtung in den Ringraum hinein und ist relativ zum Ablauf zum zumindest teilweisen Öffnen und Verschließen der Verbindung bewegbar angeordnet. Je nach Stellung der Einstelleinrichtung wird die Bohrung entweder ganz geschlossen, so dass kein Wasser durch die Verbindung strömen kann. Folglich wird das gesamte Wasser, das den Zulauf durchströmt, in die erste und die zweite Kammer geführt und behandelt. Ist die Bohrung ganz oder teilweise geöffnet, strömt ein mehr oder weniger großer Anteil des Wassers durch die Verbindung und wird nicht behandelt. Mithilfe der Stellung der Einstelleinrichtung im Ringraum kann das Verhältnis zwischen dem ersten und dem zweiten Volumenstrom auf konstruktiv einfache Weise eingestellt werden. Die Einstelleinrichtung kann beispielsweise entlang der Längsachse der Vorrichtung bewegbar, insbesondere verschiebbar ausgestaltet sein.

Vorteilhafterweise weist die Einstelleinrichtung eine Öffnung auf, welche ganz oder teilweise mit der Bohrung zur Deckung gebracht werden kann. Wird die Öffnung ganz mit der Bohrung zur Deckung gebracht, ist das Verhältnis zwischen dem ersten und dem zweiten Volumenstrom an einem Extrempunkt, an dem in diesem Fall der zweite Volumenstrom durch die Verbindung maximal groß ist. Es wird also der maximal mögliche Anteil des Wassers nicht behandelt. Wird die Öffnung nur teilweise mit der Bohrung zur Deckung gebracht, vergrößert sich das Verhältnis, so dass ein größerer Anteil des Wassers oder das gesamte in die Vorrichtung eintretende Wasser behandelt wird. Unter Verwendung der Öffnungen kann das Verhältnis auf konstruktiv einfache Weise reproduzierbar eingestellt werden.

Vorzugsweise ist die Einstelleinrichtung um die Längsachse der Vorrichtung drehbar angeordnet. Die Bohrung und die Öffnung sind in diesem Fall so ausgestaltet, dass diese durch Drehen der Einstelleinrichtung mehr oder weniger weit zur Deckung gebracht werden. Im Gegensatz zu einer Einstellung des Verhältnisses der Volumenstrome anhand einer Verschiebung entlang der Längsachse ist die Gefahr der unabsichtlichen Verstellung des eingestellten Verhältnisses beispielsweise durch eine Berührung der Einstelleinheit in diesem Ausführungsbeispiel reduziert. Weiterhin ist eine feinfühligere Einstellung des Verhältnisses möglich.

In einer vorteilhaften Ausgestaltung der vorliegenden Erfindung sind die zweiten Mittel zum Einstellen und/oder Stabilisieren des pH-Werts des Wassers ausgestaltet. Die Entmineralisierung, die in der ersten Kammer vorgenommen wird, kann so ausgeführt werden, dass der pH-Wert in der zweiten Kammer optimal eingestellt und stabilisiert wird.

Vorzugsweise umfassen die ersten Mittel Ionenaustauscherelemente und die zweiten Mittel Pufferelemente. Diese Mittel sind die Mittel der Wahl für die Entmineralisierung und die Einstellung und Stabilisierung des pH-Werts. Eine effektive Entmineralisierung kann dadurch erreicht werden, dass ein Teil der Ionenaustauscherelemente stark basisch, der andere Teil stark sauer ist. Die Pufferelemente können beispielsweise schwach saure Ionenaustauscherelemente mit Natriumhydroxid umfassen. Dadurch, dass der Teil des Wassers, der durch die Verbindung strömt, unbehandelt bleibt, verbleiben Karbonate mit puffernder Wirkung im Prozesswasser, so dass erfindungsgemäß kein zusätzlicher Puffer hinzugegeben werden muss, um den pH-Wert zu stabilisieren. Für Heiz- und Warmwasseranlagen hat sich als vorteilhaft herausgestellt, wenn das Verhältnis zwischen dem ersten und dem zweiten Volumenstrom im Bereich von 19:1 liegt. In diesem Bereich ist einerseits der Leitwert des entmineralisierten Wassers gering genug, so dass eine Belagbildung weitgehend reduziert wird, andererseits ist die erzielte Pufferwirkung noch ausreichend groß, dass der pH-Wert sicher stabilisiert wird.

Vorzugsweise umfassen die zweiten Mittel Korrosionsschutzmittel. Diese können beispielsweise ein chemischer Inhibitor oder ein Sauerstoffbinder sein. Sauerstoffbinder reduzieren den gelösten Sauerstoff im Prozesswasser, der beispielsweise durch Undichtigkeiten im Kreislauf in das Prozesswasser eingelagert werden kann.

Die zweiten Mittel sind unabhängig davon, ob sie als Pufferelemente und/oder Korrosionsschutzmittel ausgestaltet sind, erfindungsgemäß so ausgelegt, dass sie nur unter dynamischen Bedingungen aktiv sind. Der zweite Behandlungsschritt wird also nur dann durchgeführt, wenn die zweite Kammer vom Wasser durchströmt wird. Steht das Wasser in der Vorrichtung bzw. in der zweiten Kammer und liegt folglich keine Strömung an, so finden keine Interaktionen zwischen dem Wasser und dem zweiten Mittel statt. Dies ist insbesondere deshalb vorteilhaft, da somit die Vorrichtung mobil für unterschiedliche Anlagen verwendet werden kann. Sie kann beispielsweise beim Befüllen des Heizkreislaufs einer ersten Heizanlage und anschließend beim Befüllen einer zweiten Heizanlage verwendet werden. Ein zwischenzeitlicher Stillstand wirkt sich nicht negativ auf die Leistungsfähigkeit der Vorrichtung aus. Die Eigenschaften des behandelten Prozesswassers bleiben über die gesamte Betriebsdauer konstant, gleichzeitig wird die Betriebsdauer erhöht, da der Erschöpfungsprozess nur dann voranschreitet, wenn die Vorrichtung durchströmt wird.

Die Aufgabe wird weiterhin durch ein Verfahren zum Behandeln von Prozesswasser für industrielle und/oder Heimanwendungen gelost, welches die folgenden Schritte umfasst:
- Zuführen des Wassers in eine durchstrombare erste Kammer mittels eines Zulaufs,
- Entmineralisieren des Wassers in der ersten Kammer mit ersten Mitteln, Zuführen des Wassers von der ersten Kammer in eine durchströmbare zweite Kammer mittels eines Kanals, mit dem die erste und die zweite Kammer verbunden sind,
- Ausführen eines weiteren Behandlungsschritts des Wassers mit zweiten Mitteln,
- Abführen des Wassers aus der zweiten Kammer mittels eines Ablaufs, und
- gleichzeitiges Leiten von unbehandeltem Wasser vom Zulauf in den Ablauf durch eine stromaufwärts der ersten Kammer aus dem Zulauf abzweigende und stromabwärts der zweiten Kammer in den Ablauf mündende Verbindung.

Das Verfahren wird vorzugsweise in der angegebenen Reihenfolge ausgeführt. Aus der angegebenen Reihenfolge lässt sich jedoch keine Begrenzung auf eine zeitliche Abfolge der Verfahrensschritte herleiten. Die sich aus dem erfindungsgemäßen Verfahren ergebenden technischen Effekte und Vorteile entsprechen denen, die für die verschiedenen Ausführungsformen der erfindungsgemäßen Vorrichtung beschrieben worden sind.

Das erfindungsgemäße Verfahren wird vorzugsweise durch den Schritt des Einstellens des Verhältnisses zwischen dem ersten und dem zweiten Volumenstrom mit einer Einstelleinrichtung weitergebildet.

Die sich aus den verschiedenen Ausgestaltungen des Verfahrens ergebenden technischen Effekte und Vorteile entsprechen denen, die für die verschiedenen Ausführungsformen der erfindungsgemäßen Vorrichtung beschrieben worden sind.

Weiterhin betrifft die vorliegende Erfindung die Verwendung einer Vorrichtung nach einem der vorher beschriebenen Ausführungsbeispiele zum Behandeln von Prozesswasser für industrielle und/oder Heimanwendungen. Weiterhin betrifft die Erfindung auch die Verwendung eines Verfahrens nach einem der vorher beschriebenen Ausführungsbeispiele zum Behandeln von Prozesswasser für industrielle und/oder Heimanwendungen.

Die Erfindung wird im Folgenden in Bezug auf die anhangenden Zeichnungen anhand eines bevorzugten Ausführungsbeispiels im Detail beschrieben. Es zeigt
Figur 1 ein erstes Ausführungsbeispiel der erfindungsgemäßen Vorrichtung zum Behandeln von Wasser für eine Heizungs- oder Warmwasseranlage,
Figur 2 ein zweites Ausführungsbeispiel der erfindungsgemäßen Vorrichtung zum Behandeln von Wasser für eine Heizungs- oder Warmwasseranlage,
Figur 3 eine Schnittdarstellung des zweiten Ausführungsbeispiels entlang der in Figur 2 definierten Schnittebene A-A,
Figur 4 eine Vorderansicht eines ersten Ausführungsbeispiels eines erfindungsgemäßen Einsteckteils,
Figur 5 eine Schnittdarstellung des dritten Ausführungsbeispiels der erfindungsgemäßen Vorrichtung, wobei die Schnittebene derjenigen entspricht, die in Figur 2 definiert ist, und
Figur 6 eine Schnittdarstellung des vierten Ausführungsbeispiels der erfindungsgemäßen Vorrichtung, wobei die Schnittebene derjenigen entspricht, die in Figur 2 definiert ist.

Die erfindungsgemäße Vorrichtung 10₁ zum Behandeln von Wasser für eine Heizungs-oder Warmwasseranlage gemäß einem ersten Ausführungsbeispiel umfasst einen Behälter 12 mit einer Wandung 14, die eine Seitenwand 16 und eine Bodenwand 18 umfasst. Im Behälter 12 sind eine erste Kammer 22 und eine zweite Kammer 24 angeordnet, in denen das Wasser behandelt werden kann. Die Bodenwand 18 und die Seitenwand 16 begrenzen die erste Kammer 22, in der das Wasser einem ersten Behandlungsschritt unterzogen werden kann. Hierzu sind erste Mittel 26 vorgesehen, mit denen die erste Kammer 22 gefüllt ist, bei denen es sich im dargestellten Fall um Ionenaustauscherelemente 28 zum Entmineralisieren des Wassers handelt. Die zweite Kammer 24, in der das Wasser einem zweiten Behandlungsschritt unterzogen werden kann, stützt sich auf der Bodenwand 18 ab und umfasst eine Kammerwand 30. Die zweite Kammer 24 ist mit zweiten Mitteln 32 befüllt, in diesem Fall mit Pufferelementen 34, mit denen der pH-Wert auf einen gewünschten Bereich eingestellt und/oder stabilisiert werden kann.

Die erste und die zweite Kammer 22,24 sind mittels eines Kanals 36 verbunden, welcher die Kammerwand 30 durchdringt, so dass das Wasser erst die erste Kammer 22 und anschließend die zweite Kammer 24 durchströmt.

Das Wasser wird der ersten Kammer 22 mittels eines Zulaufs 38 zugeführt. Der Zulauf 38 umfasst einen sich radial erstreckenden Abschnitt 40, der mit der Seitenwand 16 abschließt. Der Zulauf 38 schließt somit den Behälter 12 auf der Seite ab, die der Bodenwand 18 gegenüber liegt. Um das Wasser aus der zweiten Kammer 24 abzuführen, ist ein Ablauf 41 vorgesehen. Der Zulauf 38 und der Ablauf 41 sind konzentrisch um eine Längsachse L der Vorrichtung 10₁ angeordnet, wobei der Zulauf 38 den Ablauf 41 unter Ausbildung eines Ringraums 42 umschließt. Der Zulauf 38 mündet in die erste Kammer 22, während der Ablauf 41 aus der zweiten Kammer 24 austritt.

Stromaufwärts von der ersten Kammer 22 zweigt eine Verbindung 44 aus dem Zulauf 38 ab, die stromabwärts der zweiten Kammer 24 in den Ablauf 41 mündet. Im dargestellten Beispiel ist die Verbindung 44 als Bohrung 46 in einer Wandung 48 des Ablaufs 41 realisiert, die mit dem Ringraum 42 in Fluidkommunikation steht.

Weiterhin ist eine Einstelleinrichtung 50 vorgesehen, die in den Ringraum 42 hineinragt und drehbar um die Längsachse L der Vorrichtung 10₁ gelagert ist (vgl. Pfeil P₁). Alternativ kann die Einstelleinrichtung 50 auch entlang der Längsachse L verschiebbar sein (Pfeil P₂). Die Einstelleinrichtung 50 weist eine Öffnung 52 auf, die durch Drehen oder Verschieben mit der Bohrung 46 zur Deckung gebracht werden kann, wodurch die Verbindung 44 geöffnet und Wasser direkt vom Zulauf 38 in den Ablauf 41 strömen kann, ohne behandelt zu werden.

Die Vorrichtung 10₁ wird wie folgt betrieben: Über einen nicht näher dargestellten Anschlusskopf wird Wasser durch den Zulauf 38 in die Vorrichtung 10₁ geführt. Je nachdem, in welcher Stellung sich die Einstelleinrichtung 50 befindet, durchtritt ein mehr oder weniger großer Teil des Wassers die Verbindung 44 und gelangt direkt und unbehandelt in den Ablauf 41 (vgl. Pfeile). Der andere Teil, der die Verbindung 44 nicht durchströmt, tritt in die erste Kammer 22 ein. Damit das Wasser die erste Kammer 22 möglichst gleichmäßig durchströmt, durchtritt es zunächst eine Verteilungseinrichtung 54, welche einen Teil des Wassers radial nach außen in Richtung der Seitenwand 16 lenkt. Die Verteilungseinrichtung 54 kann beispielsweise eine Vliesschicht 56 sein. Anschließend wird das Wasser in der ersten Kammer 22 einem ersten Behandlungsschritt unterzogen, beispielsweise einer Entmineralisierung. Hat das Wasser die Bodenwand 18 erreicht, verlässt es die erste Kammer 22 und strömt über den Kanal 36 in die zweite Kammer 24, wo es einem zweiten Behandlungsschritt unterzogen wird. In diesem Fall wird der pH-Wert auf einen gewünschten Wert eingestellt. Anschließend verlässt das Wasser die zweite Kammer durch den Ablauf 41.

Im Ablauf 41 vermischt sich das behandelte Wasser im Bereich der Bohrung 46 mit dem unbehandelten Wasser, welches direkt vom Zulauf 38 in den Ablauf 41 gelenkt worden ist. Das vermischte Wasser fließt weiter den Ablauf 41 entlang und über den nicht dargestellten Anschlusskopf, mit dem es der weiteren Verwendung beispielsweise im Heizkreislauf einer Heizungs-oder Warmwasseranlage zugeführt wird. Um zu verhindern, dass das Wasser in umgekehrter Richtung die Vorrichtung 10₁ durchströmt, so dass zuerst der pH-Wert angepasst und anschließend die Entmineralisierung ausgeführt werden würde, ist ein Rückflussverhinderer 74 vorgesehen, der im dargestellten Beispiel im Zulauf 38 angeordnet ist. Wird das Wasser zunächst in die zweite Kammer 24 und anschließend in die erste Kammer 22 geleitet, weist das so behandelte Wasser nicht die gewünschten Eigenschaften auf.

Die Entmineralisierung sorgt dafür, dass die Belagbildung reduziert oder ganz verhindert wird, so dass der Wirkungsgrad der mit dem Prozesswasser betriebenen Anlagen erhalten bleibt. Die mit der Entmineralisierung einhergehende Reduzierung des Leitwerts kann so gestaltet werden, dass dieser unter 100 µS/cm liegt. Belagbildung ist hierdurch weitgehend ausgeschlossen. Die Einstellbarkeit und die Stabilisierbarkeit des pH-Werts ermöglicht die Reduktion oder die Vermeidung von Korrosion in den Rohrleitungen und Apparaturen, in denen das Prozesswasser eingesetzt wird. Der pH-Wert wird vorzugsweise auf einen Wert zwischen 6 und 11 eingestellt. Ein pH-Wert im Bereich von 8 bis 10 hat sich als am besten geeignet herausgestellt, um eine Korrosion in Heiz-und Warmwasseranlagen wirksam einzudämmen, wohingegen pH-Werte zwischen 6,5 und 8,5 für Anlagen geeignet sind, in denen Aluminium-Bauteile in Kontakt mit dem Prozesswasser kommen, um die Bildung von Aluminaten zu reduzieren.

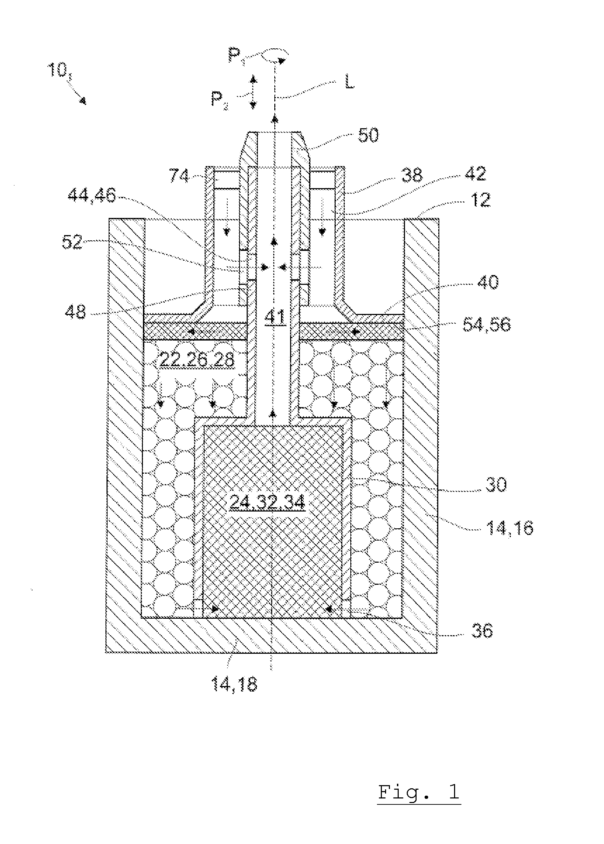

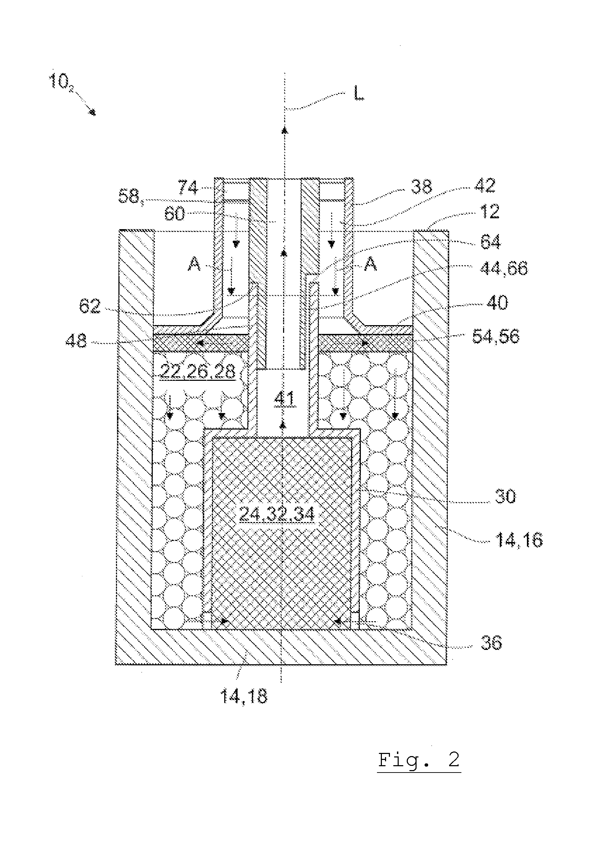

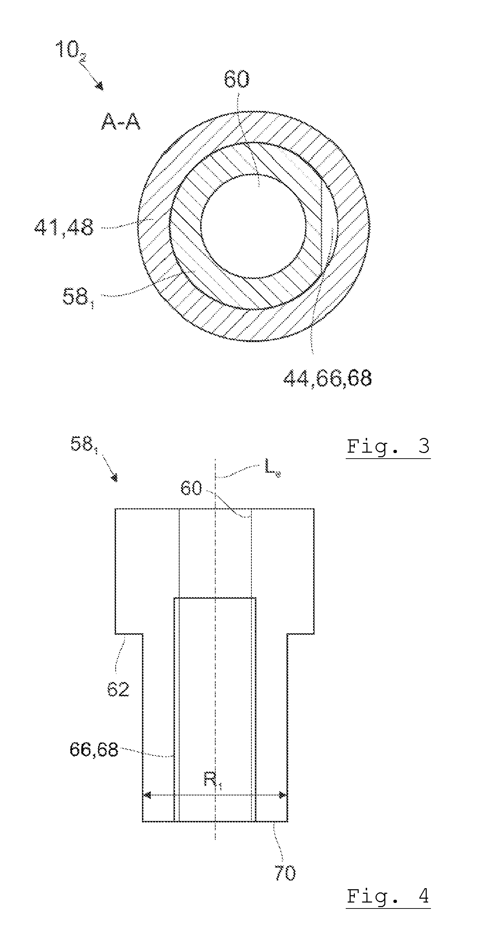

In Figur 2 ist ein zweites Ausführungsbeispiel der erfindungsgemäßen Vorrichtung 10₂ dargestellt, das weitgehend demjenigen entspricht, welches in Figur 1 dargestellt ist. Hier ist allerdings die Verbindung 44 anders ausgeführt und keine Einstelleinrichtung vorhanden. In diesem Ausführungsbeispiel wird ein Einsteckteil 58₁, das einen Anschlag 62 aufweist, soweit in den Ablauf 41 eingebracht, bis dass der Anschlag 62 gegen ein freies Ende 64 des Ablaufs 41 anschlägt. Das Einsteckteil 58 weist einen Durchgang 60 auf, durch den das Wasser aus der Vorrichtung 10 abgeleitet werden kann. Die Verbindung 44 wird durch eine Ausnehmung 66 gebildet und verläuft abschnittweise zwischen dem Einsteckteil 58₁ und der Wandung 48 des Ablaufs 41. Im dargestellten Beispiel weist das Einsteckteil 58₁ die Ausnehmung 66 auf. Die Ausnehmung 66 erstreckt sich entlang der Längsachse L der Vorrichtung 10₂ über das freie Ende 64 hinaus (vgl. Figur 4), so dass ein Teil des Wassers vom Ringraum 42 durch die Verbindung 44 direkt in den Ablauf 41 strömen kann, wo es sich mit dem behandelten Wasser mischt und über den Durchgang 60 die Vorrichtung 10₂ verlasst.

In Figur 3 ist ein nicht maßstabsgerechter Schnitt entlang der in Figur 2 definierten Ebene A-A dargestellt. Man erkennt, dass die Ausnehmung 66 des Einsteckteils 58₁ als eine radial außen angeordnete Abflachung 68 des ansonsten ringförmigen Querschnitts ausgebildet ist. Die Abflachung 68 bildet zusammen mit der Wandung 48 des Ablaufs 41 die Verbindung 44, durch welche das unbehandelte Wasser strömen kann.

In Figur 4 ist das Einsteckteil 58₁ isoliert in einer Vorderansicht dargestellt. Man erkennt, dass sich die Abflachung 68 ausgehend von einer Stirnflache 70 in Richtung der Längsachse Lₑ des Einsteckteils 58 über die vom Anschlag 62 gebildete Ebene hinaus erstreckt, so dass eine Fluid-Kommunikation zwischen dem Ringraum und dem Ablauf 41 (vgl. Figur 2) hergestellt werden kann.

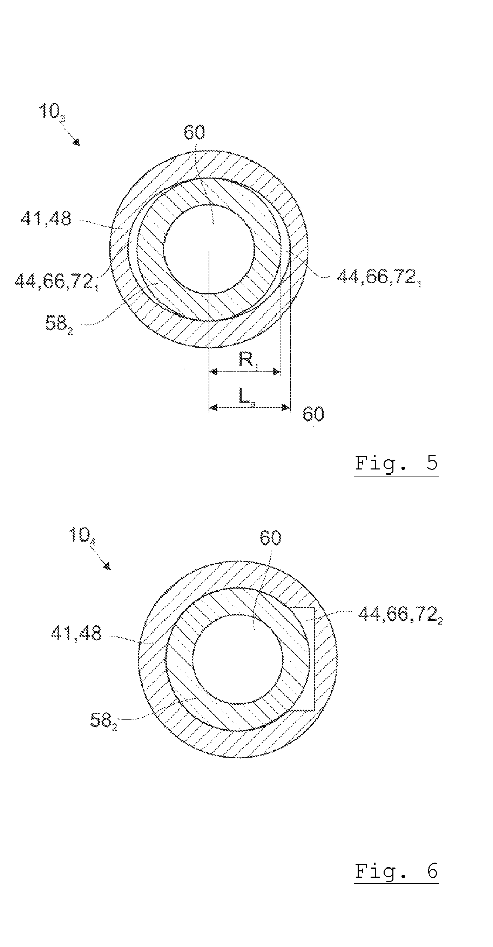

In Figur 5 ist ein drittes Ausführungsbeispiel der erfindungsgemäßen Vorrichtung 10₃ entlang eines Schnitts dargestellt, wobei die Schnittebene der entspricht, die in Figur 2 definiert worden ist. In diesem Beispiel ist die Ausnehmung 66 in der Wandung 48 angeordnet und als Nut 72₁ ausgeführt, die entlang der Schnittebene eine elliptische Form aufweist. Die großen Halbachsen weisen dabei jeweils eine Länge Lₐ auf, die größer als ein erster Radius R₁ des Einsteckteils 58₂ ist, wodurch die Verbindung 44 zwischen dem Einsteckteil 58 und der Wandung 48 geschaffen wird, so dass eine Fluid-Kommunikation zwischen dem Ringraum und dem Ablauf 41 hergestellt werden kann. Da die Ausnehmung 66 in der Wandung 48 angeordnet ist, weist in diesem Fall das Einsteckteil 58₂ keine Ausnehmung auf. Alternativ kann aber sowohl das Einsteckteil 58 als auch die Wandung 48 eine Ausnehmung aufweisen (nicht dargestellt).

In Figur 6 ist ein viertes Ausführungsbeispiel der erfindungsgemäßen Vorrichtung 10₄ entlang eines Schnitts gezeigt, wobei die Schnittebene derjenigen entspricht, die in Figur 2 definiert worden ist. Auch in diesem Beispiel ist die Ausnehmung 66 in der Wandung 48 angeordnet und als Nut 72₂ ausgeführt, die sich entlang der Wandung 48 erstreckt und eine eckige Querschnittsform aufweist. Auch in diesem Fall weist das Einsteckteil 58₂ keine Ausnehmung auf.

In den Ausführungsbeispielen, bei denen die Ausnehmung in der Wandung verläuft, weist die Wandung 48 am freien Ende 64 eine Ausbuchtung auf (nicht dargestellt), so dass der Anschlag 62 nicht vollständig auf dem freien Ende 64 aufliegt und die Fluid-Kommunikation zwischen dem Ringraum 42 und dem Ablauf 41 hergestellt werden kann.

### BEZUGSZEICHENLISTE:

- 10₁ bis 10₄: Vorrichtung
- 12: Behälter
- 14: Wandung
- 16: Seitenwand
- 18: Bodenwand
- 22: erste Kammer
- 24: zweite Kammer
- 26: erste Mittel
- 28: Ionenaustauscherelemente
- 30: Kammerwand
- 32: zweite Mittel
- 34: Pufferelemente
- 36: Kanal
- 38: Zulauf
- 40: Abschnitt
- 41: Ablauf
- 42: Ringraum
- 44: Verbindung
- 46: Bohrung
- 48: Wandung
- 50: Einstelleinrichtung
- 52: Öffnung
- 54: Verteilungseinrichtung
- 56: Vliesschicht
- 58₁ bis 58₂: Einsteckteil
- 60: Durchgang
- 62: Anschlag
- 64: freies Ende
- 66: Ausnehmung
- 68: Abflachung
- 70: Stirnfläche
- 72: Nut
- 74: Rückflussverhinderer
- L: Längsachse der Vorrichtung
- Lₐ: Länge der Halbachse
- Lₑ: Längsachse des Einsteckteils
- R₁: erster Radius des Einsteckteils

## Patentansprüche

1. Vorrichtung zum Behandeln von Prozesswasser, insbesondere für industrielle und/oder Heimanwendungen, umfassend
eine durchströmbare erste Kammer (22) mit ersten Mitteln (26) zum Entmineralisieren des Wassers,
eine durchströmbare zweite Kammer (24) mit zweiten Mitteln (32) zum Ausführen eines weiteren Behandlungsschritts, wobei die erste Kammer (22) stromaufwärts der zweiten Kammer (24) angeordnet ist und die erste und die zweite Kammer (22,24) mittels eines Kanals (36) verbunden sind,
einen Zulauf (38) zum Zuführen des Wassers in die erste Kammer (22), und
einen Ablauf (41) zum Abführen des Wassers aus der zweiten Kammer (24),
**gekennzeichnet durch** eine stromaufwärts der erstem Kammer (22) aus dem Zulauf (38) abzweigende und stromabwärts der zweiten Kammer (24) in den Ablauf (41) mündende Verbindung (44) zum Leiten von unbehandeltem Wasser vom Zulauf (38) in den Ablauf (41).

2. Vorrichtung nach Anspruch 1, wobei der Zulauf (38) und der Ablauf (41) unter Ausbildung eines Ringraums (42) konzentrisch zueinander verlaufen und die Verbindung (44) in Fluid-Kommunikation mit dem Ringraum (42) steht.

3. Vorrichtung nach Anspruch 2, wobei der Zulauf (38) den Ablauf (41) zumindest abschnittweise umschließt und die Verbindung (44) als Bohrung (46) in einer Wandung (48) des Ablaufs (41) ausgebildet ist.

4. Vorrichtung nach Anspruch 2, wobei der Zulauf (38) den Ablauf (41) zumindest abschnittweise umschließt und die Vorrichtung (10) ein zumindest teilweise in den Ablauf (41) einbringbares Einsteckteil (58) mit einem Durchgang (60) zum Abführen des Wassers und einen Anschlag (62) umfasst, mit dem das Einsteckteil (58) mit einem freien Ende (64) des Ablaufs (41) zur Anlage kommt, und wobei die Verbindung (44) abschnittsweise zwischen der Wandung (48) und dem Einsteckteil (58) verläuft.

5. Vorrichtung nach Anspruch 4, wobei die Verbindung (44) von einer in der Wandung (48) und/oder im Einsteckteil (58) angeordneten Ausnehmung (66) gebildet wird.

6. Vorrichtung nach einem der vorherigen Ansprüche, wobei ein erster Volumenstrom durch die erste Kammer (22) und die zweite Kammer (24) strömt und ein zweiter Volumenstrom durch die Verbindung (44) strömt, und die Vorrichtung ferner eine Einstelleinrichtung (50) zum Einstellen des Verhältnisses zwischen dem ersten und dem zweiten Volumenstrom umfasst.

7. Vorrichtung nach Anspruch 6, wobei die Einstelleinrichtung (50) in den Ringraum (42) hineinragt und relativ zum Ablauf (41) zum zumindest teilweisen Offnen und Verschließen der Verbindung (44) bewegbar angeordnet ist.

8. Vorrichtung nach Anspruch 7, wobei die Einstelleinrichtung (50) eine Öffnung (52) aufweist, welche ganz oder teilweise mit der Bohrung (46) zur Deckung gebracht werden kann.

9. Vorrichtung nach Anspruch 7 oder 8, wobei die Einstelleinrichtung (50) um die Längsachse (L) der Vorrichtung (10) drehbar angeordnet ist.

10. Vorrichtung nach einem der vorherigen Ansprüche, wobei die zweiten Mittel zum Einstellen und/oder Stabilisieren des pH-Werts des Wassers ausgestaltet sind.

11. Vorrichtung nach Anspruch 10, wobei die ersten Mittel (26) Ionenaustauscherelemente (28) und die zweiten Mittel (32) Pufferelemente (34) umfassen.

12. Vorrichtung nach einem der Ansprüche 1 bis 9, wobei die zweiten Mittel (26) Korrosionsschutzmittel umfassen.

13. Verfahren zum Behandeln von Prozesswasser für industrielle und/oder Heimanwendungen, umfassend folgende Schritte:
- Zuführen des Wassers in eine durchströmbare erste Kammer (22) mittels eines Zulaufs (38),
- Entmineralisieren des Wassers in der ersten Kammer (22) mit ersten Mitteln (26),
- Zuführen des Wassers von der ersten Kammer (22) in eine durchströmbare zweite Kammer (24) mittels eines Kanals (36), mit dem die erste und die zweite Kammer (22,24) verbunden sind,
- Ausführen eines weiteren Behandlungsschritts des Wassers mit zweiten Mitteln (32),
- Abführen des Wassers aus der zweiten Kammer (24) mittels eines Ablaufs (41), und
- gleichzeitiges Leiten von unbehandeltem Wasser vom Zulauf (38) in den Ablauf (41) durch eine stromaufwärts der ersten Kammer (22) aus dem Zulauf (38) abzweigende und stromabwärts der zweiten Kammer (24) in den Ablauf (41) mündende Verbindung (44).

14. Verfahren nach Anspruch 13, bei dem ein erster Volumenstrom durch die erste Kammer (22) und die zweite Kammer (24) strömt und ein zweiter Volumenstrom durch die Verbindung (44) strömt, weiterhin umfassend folgenden Schritt:
einstellen des Verhältnisses zwischen dem ersten und dem zweiten Volumenstrom mit einer Einstelleinrichtung (50).

15. Verwendung einer Vorrichtung nach einem der Ansprüche 1 bis 10 zum Behandeln von Prozesswasser für industrielle und/oder Heimanwendungen.
